# EUROPÄISCHE PATENTSCHRIFT

(11) **EP 2 860 377 B1**
(45) Veröffentlichungstag und Bekanntmachung des Hinweises auf die Patenterteilung: **01.02.2017**
(21) Anmeldenummer: 14003355.6
(22) Anmeldetag: 29.09.2014
(51) Int. Cl.: F02D 29/06, F02D 17/02, F02D 23/00, F02D 41/00, H02P 9/04, F02B 37/16, F02B 37/18

(54) **Verfahren zum Betreiben einer mit einem Generator gekoppelten Brennkraftmaschine**
Method for operating an internal combustion engine coupled with a generator
Procédé de fonctionnement d'un moteur couplé à un générateur

(30) Priorität: 09.10.2013 AT 7752013
(43) Veröffentlichungstag der Anmeldung: 15.04.2015
(73) Patentinhaber: GE Jenbacher GmbH & Co OG, 6200 Jenbach (AT)
(72) Erfinder: Thalhauser, Josef, 83191 Nussdorf (DE); Perktold, Michael, 6633 Biberwier (AT); Hirzinger-Unterrainer, Johann, 6345 Kössen (AT); Schaumberger, Herbert, 6232 Münster (AT)
(74) Vertreter: Torggler & Hofinger Patentanwälte

(56) Entgegenhaltungen:
- WO-A1-2011/088483
- FR-A- 1 438 964
- JP-A- 2000 257 511

## Beschreibung

Die Erfindung betrifft ein Verfahren zum Betreiben einer mit einem Generator gekoppelten Brennkraftmaschine bei einem Netzfehler eines mit dem Generator verbundenen Energieversorgungsnetzes, insbesondere bei einem dynamischen Netzspannungseinbruch, wobei die Brennkraftmaschine einen Turbolader umfasst, der einen Verdichter in einer Luftzufuhrleitung der Brennkraftmaschine und eine mit dem Verdichter gekoppelte Abgasturbine in einer Abgasleitung der Brennkraftmaschine aufweist, wobei wenigstens ein Bypassventil zur Umgehung des Verdichters und/oder zur Umgehung der Abgasturbine vorgesehen ist.

Beim Anschluss von Energieerzeugungsanlagen mit einem Generator, der mit einem Energieversorgungsnetz zu verbinden ist, sind die jeweils vorherrschenden Netz- und Systemregeln des entsprechenden Energieversorgungsnetzbetreibers zu beachten. Diese auch als "Grid Code" oder "Transmission Code" bezeichneten Netz- und Systemregeln legen unter anderem technische Mindestanforderungen und Verfahrensweisen von Energieerzeugungsanlagen bei einem Netzfehler des Energieversorgungsnetzes fest. Dabei sind auch Netzfehler in Form von dynamischen Netzspannungseinbrüchen, die auch unter der englischen Bezeichnung "low voltage ride through" (LVRT) Ereignisse bekannt sind, von Relevanz. Bei Auftreten eines solchen dynamischen Netzspannungseinbruchs ist es erstrebenswert, dass der elektrische Phasenwinkel, der auch als Lastwinkel oder Polradwinkel bezeichnet wird, innerhalb vorgegebener Grenzen bleibt, da es ansonsten zu einem Polschlupf am Generator und in weiterer Folge zu einem unkontrollierten Beschleunigen der mit dem Generator gekoppelten Brennkraftmaschine kommen kann. Darüber hinaus nehmen bei einer Netzwiederkehr nach Abklingen des Netzfehlers die mechanischen Belastungen von Generator, Brennkraftmaschine und Kupplung zwischen Brennkraftmaschine und Generator mit steigender Phasenwinkeländerung zu.

Ein Beispiel für ein ähnliches Verfahren ist in WO 2011/088483 offenbart.

Eine herkömmliche Maßnahme um die Phasenwinkeländerung in vordefinierten Grenzen zu halten ist es, die Zündung in einer mit dem Generator gekoppelten Brennkraftmaschine zu deaktivieren. Bei einer Brennkraftmaschine mit Turbolader verschiebt sich jedoch durch das Abschalten der Zündung der Betriebspunkt im Verdichterkennfeld in Richtung der Pumpgrenze. Wird die Pumpgrenze überschritten, kommt es zu einem Strömungsabriss an den Verdichterschaufeln des Turboladers und sogenanntes Verdichterpumpen tritt auf, welches in weiterer Folge zu einem unstabilen Betriebszustand der Brennkraftmaschine führen kann.

Aufgabe der Erfindung ist es, die vorbeschriebenen Nachteile zu vermeiden und ein gegenüber dem Stand der Technik verbessertes Verfahren zum Betreiben einer mit einem Generator gekoppelten Brennkraftmaschine bei einem Netzfehler des Energieversorgungsnetzes anzugeben. Insbesondere soll ermöglicht werden, unter Berücksichtigung von vorherrschenden Netz- und Systemregeln, ein Verdichterpumpen bei Auftreten eines Netzfehlers - insbesondere eines dynamischen Netzspannungseinbruchs - zu vermeiden.

Diese Aufgabe wird erfindungsgemäß durch die Merkmale des Anspruchs 1 gelöst. Vorteilhafte Ausgestaltungen in der Erfindung sind in den abhängigen Ansprüchen angegeben.

Gemäß der Erfindung ist also vorgesehen, dass bei oder nach Detektion des Netzfehlers das wenigstens eine Bypassventil zumindest zeitweise betätigt wird.

Als Bypassventil kann ein Verdichter-Bypassventil zur Umgehung des Verdichters in einer Verdichter-Bypassleitung vorgesehen sein, die einen Verdichtereingang mit einem Verdichterausgang verbindet. Dabei kann beispielsweise auch vorgesehen sein, dass stromabwärts des Verdichters ein Ladeluftkühler angeordnet ist, wobei die Verdichter-Bypassleitung den Verdichtereingang mit einem Ausgang des Ladeluftkühlers verbindet.

Alternativ oder zusätzlich kann als Bypassventil auch ein Abgasturbinen-Bypassventil zur Umgehung der Abgasturbine in einer Abgas-Bypassleitung vorgesehen sein, die einen Abgasturbineneingang mit einem Abgasturbinenausgang verbindet.

Bei der Brennkraftmaschine kann es sich um einen Gasmotor (z.B. einen stationären Gasmotor) handeln, in dem ein Brennstoff (z.B. Brenngas) unter Anwesenheit von Luft verbrannt wird. Beim Generator kann es sich um einen Wechselstromgenerator handeln, der von der Brennkraftmaschine angetrieben wird und elektrischen Strom in ein mit dem Generator verbundenes Energieversorgungsnetz einspeist.

Das Auftreten eines Netzfehlers kann in bekannter Art und Weise detektiert werden, z.B. indem die Drehzahl der Brennkraftmaschine oder des Generators durch einen Ausfall des Energieversorgungsnetzes über einen vorgebbaren Maximalwert steigt, oder indem eine Generatorspannung, eine Generatorfrequenz oder ein Generatorstrom des Generators überwacht wird, wobei ein Netzfehler detektiert wird wenn beispielsweise die Generatorspannung wegfällt und/oder die Generatorfrequenz über einen vorgebbaren Grenzwert steigt und/oder der Generatorstrom über einen vorgebbaren Grenzwert ansteigt.

Durch das zumindest zeitweise Betätigen wenigstens eines Bypassventils (also z.B. des Verdichter-Bypassventils und/oder des Abgas-Bypassventils) kann bei einem Netzfehler und einem damit eventuell verbundenen Ausschalten der Zündung Verdichterpumpen vermieden und so die mit dem Generator gekoppelte Brennkraftmaschine entsprechend stabilisiert werden.

Gemäß einer besonders bevorzugten Ausführungsform kann vorgesehen sein, dass das wenigstens eine Bypassventil vor Detektion des Netzfehlers eine erste Stellung aufweist, wobei bei oder nach Detektion des Netzfehlers das wenigstens eine Bypassventil auf eine von der ersten Stellung abweichende Betätigungsstellung eingestellt wird.

Vorzugsweise kann dabei vorgesehen sein, dass das wenigstens eine Bypassventil (z.B. Verdichter-Bypassventil) auf eine gegenüber der ersten Stellung weiter geöffnete Betätigungsstellung geöffnet wird.

Gemäß einer besonders bevorzugten Ausführungsform kann vorgesehen sein, dass das wenigstens eine Bypassventil während einer vorgebbaren Betätigungszeit in der Betätigungsstellung gehalten wird.

Vorzugsweise kann vorgesehen sein, dass das wenigstens eine Bypassventil nach der vorgebbaren Betätigungszeit im Wesentlichen wieder auf die erste Stellung eingestellt wird, also auf die Position wie vor dem dynamischen Netzspannungseinbruch. Grundsätzlich ist es jedoch auch möglich, dass das wenigstens eine Bypassventil nach der vorgebbaren Betätigungszeit im Wesentlichen vollständig geschlossen wird.

Als besonders vorteilhaft hat es sich herausgestellt, wenn das wenigstens eine Bypassventil nach der vorgebbaren Betätigungszeit bis zu einer gegenüber der ersten Stellung weiter geschlossenen zweiten Stellung geschlossen und während einer vorgebbaren Zeit in der zweiten Stellung gehalten wird, wobei vorzugsweise das wenigstens eine Bypassventil nach der vorgebbaren Zeit im Wesentlichen wieder bis zur ersten Stellung geöffnet wird. Durch das weitere Schließen des Bypassventils bis zur gegenüber der ersten Stellung weiter geschlossenen zweiten Stellung kann erreicht werden, dass die Motorleistung der Brennkraftmaschine schneller wieder ihren Ausgangswert wie vor dem Netzfehler erreicht.

Insbesondere bei starken Netzspannungseinbrüchen kann vorgesehen sein, dass bei oder nach Detektion des Netzfehlers eine Zündung in der Brennkraftmaschine deaktiviert wird. Dabei kann zur Zündung in der Brennkraftmaschine wenigstens eine Zündvorrichtung vorgesehen sein, wobei zur Deaktivierung der Zündung in der Brennkraftmaschine die wenigstens eine Zündvorrichtung deaktiviert wird. Es kann auch vorgesehen sein, dass zur Zündung in der Brennkraftmaschine ein Brennstoff zugeführt wird, wobei zur Deaktivierung der Zündung in der Brennkraftmaschine die Zufuhr von Brennstoff unterbunden wird. Bei der Zündvorrichtung kann es sich beispielsweise um eine Elektrodenzündkerze oder eine Laserzündkerze handeln. Für die Brennstoffzufuhr kann wenigstens eine Brennstoffdosiereinrichtung, beispielsweise in Form eines Port-Injection-Ventils, vorgesehen sein.

Durch das Betätigen des wenigstens einen Bypassventils und das Deaktivieren der Zündung in der Brennkraftmaschine kann eine verlängerte Zeitspanne mit deaktivierter Zündung erzielt werden, ohne dass ein Verdichterpumpen auftritt.

Vorzugsweise kann vorgesehen sein, dass die Zündung in der Brennkraftmaschine nach Abklingen des Netzfehlers wieder aktiviert wird. Dabei kann vorgesehen sein, dass die Zündung in der Brennkraftmaschine wieder aktiviert wird, wenn eine Drehzahl der Brennkraftmaschine oder des Generators einen vorgebbaren Drehzahlwert erreicht und/oder eine relative Phasenwinkeländerung des Generators einen vorgebbaren Wert erreicht.

Eine besondere Ausführungsvariante sieht vor, dass das wenigstens eine Bypassventil vor Detektion des Netzfehlers eine erste Stellung aufweist, wobei bei oder nach Detektion des Netzfehlers das wenigstens eine Bypassventil auf eine von der ersten Stellung abweichende Betätigungsstellung eingestellt wird, wobei das wenigstens eine Bypassventil nach Abklingen des Netzfehlers auf eine von der Betätigungsstellung abweichende Stellung eingestellt wird.

Üblicherweise wird die Zündung in der Brennkraftmaschine erst wieder eingeschaltet, wenn der dynamische Netzspannungseinbruch vorbei ist. Der Zeitpunkt, zu dem die Zündung wieder eingeschaltet wird, kann dabei aus der Drehzahl von Brennkraftmaschine bzw. Generator und/oder aus dem Wert der relativen Phasenwinkeländerung bestimmt werden. Insbesondere durch das Zurücksetzen des Bypassventils auf seine Ausgangsposition wie vor dem Netzfehler - also auf seine erste Stellung - kann erreicht werden, dass die Brennkraftmaschine wieder stabil mit gleicher Leistung wie vor dem Netzfehler weiterläuft.

Grundsätzlich kann auch hier vorgesehen sein, dass das wenigstens eine Bypassventil nach Abklingen des Netzfehlers bis zu einer gegenüber der ersten Stellung weiter geschlossenen zweiten Stellung geschlossen und während einer vorgebbaren Zeit in der zweiten Stellung gehalten wird, wobei vorzugsweise das wenigstens eine Bypassventil nach der vorgebbaren Zeit im Wesentlichen wieder bis zur ersten Stellung geöffnet wird.

Gemäß einer besonders bevorzugten Ausführungsform kann vorgesehen sein, dass nach Abklingen des Netzfehlers das Aktivieren der Zündung und das Einstellen des wenigstens einen Bypassventils auf eine von der Betätigungsstellung abweichende Stellung im Wesentlichen zum selben Zeitpunkt stattfindet. Hierbei kann das Wiedereinschalten der Zündung das auslösende Ereignis darstellen, um das Bypassventil zu betätigen.

Es kann auch vorgesehen sein, dass nach Abklingen des Netzfehlers das Einstellen des wenigstens einen Bypassventils auf eine von der Betätigungsstellung abweichende Stellung nach dem Aktivieren der Zündung stattfindet, vorzugsweise nach einer vorgebbaren zweiten Zeit nach dem Aktivieren der Zündung.

In anderen Worten ausgedrückt, bestehen im Normalbetrieb einer Brennkraftmaschine Regelreserven nach oben und unten, d.h. zu höherer und zu geringerer Leistung. Gemäß einem bevorzugten Ausführungsbeispiel der vorliegenden Erfindung werden die Regelreserven nach oben ausgenutzt indem nach Abklingen des Netzfehlers wenigstens einer der Bypass-Klappen weiter geschlossen wird (auf eine weiter geschlossene Position als vor dem Netzfehler gebracht wird) und auf diese Weise rasch Ladedruck aufgebaut wird. Auf diese Weise kommt die Brennkraftmaschine nach einem Netzfehler schneller wieder auf Nennlast / Nenndrehzahl.

Weitere Einzelheiten und Vorteile der vorliegenden Erfindung werden anhand der nachfolgenden Figurenbeschreibung erläutert. Dabei zeigt bzw. zeigen:
- Fig. 1: ein schematisches Blockschaltbild eines mit einem Energieversorgungsnetz verbundenen Generators, der von einer Brennkraftmaschine antreibbar ist,
- Fig. 2: den zeitlichen Verlauf der Ventilstellung eines Bypassventils gemäß einem Ausführungsbeispiel des vorgeschlagenen Verfahrens und
- Fig. 3: den zeitlichen Verlauf der Ventilstellung eines Bypassventils sowie den zeitlichen Verlauf einer Zündung der Brennkraftmaschine gemäß einem weiteren Ausführungsbeispiel des vorgeschlagenen Verfahrens.

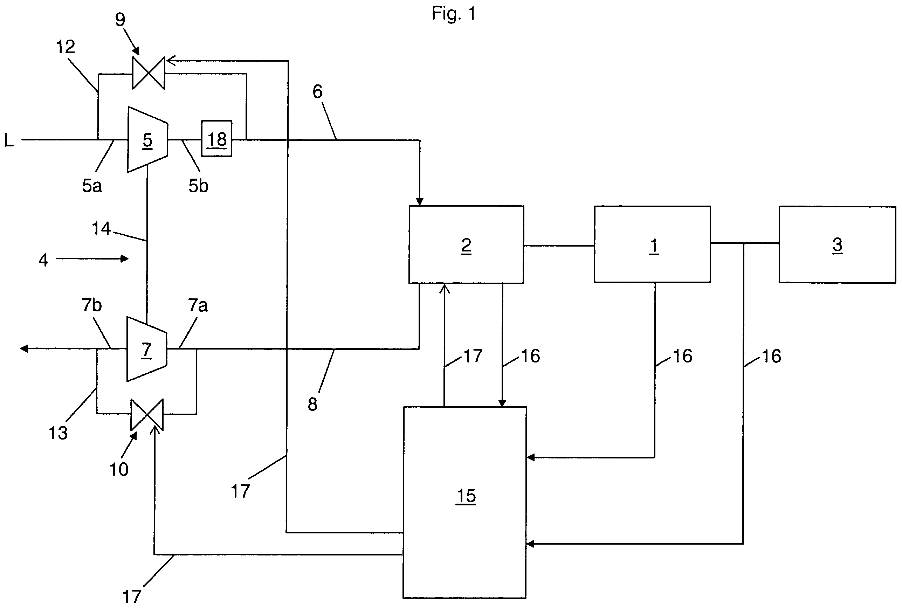

Fig. 1 zeigt in einem schematischen Blockschaltbild einen elektrischen Generator 1, der mit einem Energieversorgungsnetz 3 verbunden ist. Beim elektrischen Generator 1 kann es sich um einen Wechselstromgenerator handeln, der an ein dreiphasiges Energieversorgungsnetz 3 angeschlossen ist. Der Generator 1 ist mit einer Brennkraftmaschine 2 gekoppelt, die in diesem Beispiel als stationärer Gasmotor ausgebildet ist. Durch die Brennkraftmaschine 2 ist der Generator 1 antreibbar, um elektrischen Strom zu produzieren, der in das Energieversorgungsnetz 3 eingespeist wird. Über eine Luftzufuhrleitung 6 wird der Brennkraftmaschine 2 Ladeluft L zugeführt. Bei der Ladeluft L kann es sich beispielsweise um ein Brennstoffluftgemisch (z.B. für Gemisch-aufgeladene Brennkraftmaschinen) oder um im Wesentlichen nur Luft (z.B. für Luft-aufgeladene Brennkraftmaschinen) handeln. Abgas der Brennkraftmaschine 2 wird über eine Abgasleitung 8 abgeführt. Die Brennkraftmaschine 2 ist mit wenigstens einem Turbolader 4 ausgestattet, der in bekannter Weise einen Verdichter 5 in der Luftzufuhrleitung 6 und eine mit dem Verdichter 5 gekoppelte Abgasturbine 7 in der Abgasleitung 8 umfasst. Der Verdichter 5 ist über eine Turboladerwelle 14 mit der Abgasturbine 7 gekoppelt. Stromabwärts des Verdichters 5 ist in der Luftzufuhrleitung 6 ein Ladeluftkühler 18 zur Kühlung der verdichteten Ladeluft L angeordnet. Die Ladeluft L wird über die Luftzufuhrleitung 6 zu einem Verdichtereingang 5a des Verdichters 5 geführt. Ein Verdichterausgang 5b des Verdichters 5 mündet in den Ladeluftkühler 18.

Zur Umgehung von Verdichter 5 und/oder Abgasturbine 7 sind in diesem Beispiel zwei Bypassventile 9, 10 vorgesehen. Ein Verdichter-Bypassventil 9 zur Umgehung des Verdichters 5 ist dabei in einer Verdichter-Bypassleitung 12 angeordnet, die den Verdichtereingang 5a mit der Luftzufuhrleitung 6 stromabwärts des in der Luftzufuhrleitung 6 angeordneten Ladeluftkühlers 18 verbindet. Ein Abgasturbinen-Bypassventil 10 zur Umgehung der Abgasturbine 7 ist in einer Abgas-Bypassleitung 13 angeordnet, die einen Abgasturbineneingang 7a direkt mit einem Abgasturbinenausgang 7b verbindet.

Zur Detektion eines Netzfehlers ist eine Steuervorrichtung 15 vorgesehen, die verschiedene Betriebsparameter der Brennkraftmaschine 2 und/oder des Generators 1 und/oder des Energieversorgungsnetzes 3 überwachen kann, indem entsprechende Werte dieser Betriebsparameter über Signalleitungen 16 an die Steuervorrichtung 15 gemeldet werden. So können beispielsweise einer oder mehrere der folgenden Betriebsparameter überwacht werden: Drehzahl der Brennkraftmaschine 2, Drehzahl des Generators 1, elektrische Spannung des Generators 1 und/oder des Energieversorgungsnetzes 3, Spannungsfrequenz des Generators 1 und/oder des Energieversorgungsnetzes 3, elektrischer Strom des Generators 1 und/oder des Energieversorgungsnetzes 3.

Wird durch Erkennen einer Abweichung des wenigstens einen überwachten Betriebsparameters ein Netzfehler detektiert, so meldet die Steuervorrichtung 15 über entsprechende Steuerleitungen 17 Stellsignale an das Verdichter-Bypassventil 9 und/oder an das Abgasturbinen-Bypassventil 10, um bei bzw. nach Detektion des Netzfehlers zumindest zeitweise wenigstens eines dieser Bypassventile 9, 10 zu betätigen.

Zusätzlich kann über eine weitere Steuerleitung 17 ein Steuersignal an die Brennkraftmaschine 2 gemeldet werden, um bei bzw. nach Detektion des Netzfehlers eine Zündung in der Brennkraftmaschine 2 zu deaktivieren.

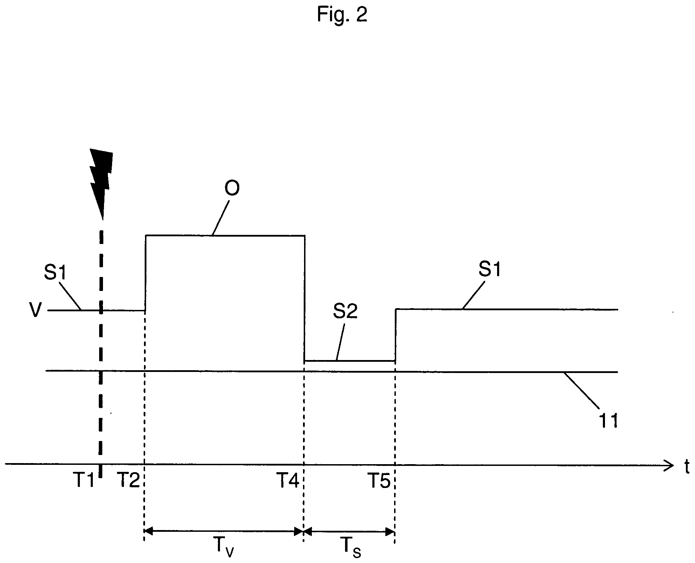

Fig. 2 zeigt den Verlauf einer Ventilstellung V eines Bypassventils 9, 10 über die Zeit t, sowie den Verlauf einer Zündung 11 in der Brennkraftmaschine 2 über die Zeit t. Zum Zeitpunkt T1 wird ein Netzfehler, beispielsweise ein dynamischer Netzspannungseinbruch, detektiert. Zu diesem Zeitpunkt befindet sich ein Bypassventil 9, 10 in einer ersten Stellung S1. Nach Detektion des Netzfehlers wird zum Zeitpunkt T2 das Bypassventil 9, 10 beispielhaft in eine Betätigungsstellung O geöffnet. Nach einer vorgebbaren Betätigungszeit Tv wird das Bypassventil 9, 10 wieder geschlossen. Im gezeigten Beispiel erfolgt das Schließen des Bypassventils 9, 10 bis zu einer gegenüber der ersten Stellung S1 weiter geschlossenen zweiten Stellung S2. Nach einer vorgebbaren Zeit T_{S} wird zum Zeitpunkt T5 das Bypassventil 9, 10 von seiner zweiten Stellung S2 wieder in die erste Stellung S1 gebracht, die das Bypassventil 9, 10 vor Auftreten des Netzfehlers hatte. Während dieses gesamten Verlaufs bleibt die Zündung 11 in der Brennkraftmaschine 2 unverändert ein.

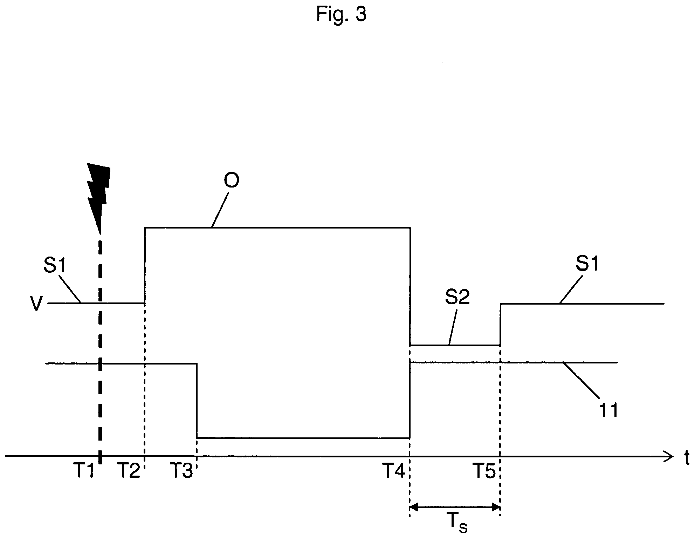

Fig. 3 zeigt die zeitlichen Verläufe von Ventilstellung V und Zündung 11 in der Brennkraftmaschine 2 ähnlich zu Fig. 2, wobei in diesem Beispiel zusätzlich zum Öffnen des Bypassventils 9, 10 die Zündung 11 in der Brennkraftmaschine 2 zeitweise deaktiviert wird. Nach Detektion des Netzfehlers wird in diesem Beispiel zum Zeitpunkt T3 die Zündung 11 in der Brennkraftmaschine 2 deaktiviert und nach Abklingen des Netzfehlers zum Zeitpunkt T4 wieder aktiviert. Das Schließen des Bypassventils 9, 10 sowie das Aktivieren der Zündung 11 findet in diesem Beispiel im Wesentlichen zum selben Zeitpunkt T4 statt. Im Vergleich zum zeitlichen Verlauf der Ventilstellung V gemäß Fig. 2 bleibt das Bypassventil 9, 10 in diesem Beispiel so lange in der Betätigungsstellung O, bis die Zündung 11 in der Brennkraftmaschine 2 wieder eingeschaltet wird. Nach einer vorgebbaren Zeit T_{S} wird zum Zeitpunkt T5 das Bypassventil 9, 10 von seiner zweiten Stellung S2 wieder in die erste Stellung S1 gebracht, die das Bypassventil 9, 10 vor Auftreten des Netzfehlers hatte.

## Patentansprüche

1. Verfahren zum Betreiben einer mit einem Generator (1) gekoppelten Brennkraftmaschine (2) bei einem Netzfehler eines mit dem Generator (1) verbundenen Energieversorgungsnetzes (3), insbesondere bei einem dynamischen Netzspannungseinbruch, wobei die Brennkraftmaschine (2) einen Turbolader (4) umfasst, der einen Verdichter (5) in einer Luftzufuhrleitung (6) der Brennkraftmaschine (2) und eine mit dem Verdichter (5) gekoppelte Abgasturbine (7) in einer Abgasleitung (8) der Brennkraftmaschine (2) aufweist, wobei wenigstens ein Bypassventil (9, 10) zur Umgehung des Verdichters (5) und/oder zur Umgehung der Abgasturbine (7) vorgesehen ist, wobei bei oder nach Detektion des Netzfehlers das wenigstens eine Bypassventil (9, 10) zumindest zeitweise betätigt wird und wobei bei oder nach Detektion des Netzfehlers eine Zündung (11) in der Brennkraftmaschine (2) deaktiviert wird, wobei die Zündung (11) in der Brennkraftmaschine (2) nach Abklingen des Netzfehlers wieder aktiviert wird wobei das wenigstens eine Bypassventil (9, 10) vor Detektion des Netzfehlers eine erste Stellung (S1) aufweist, wobei bei oder nach Detektion des Netzfehlers das wenigstens eine Bypassventil (9, 10) auf eine von der ersten Stellung (S1) abweichende Betätigungsstellung (O) eingestellt wird, wobei das wenigstens eine Bypassventil (9, 10) nach Abklingen des Netzfehlers auf eine von der Betätigungsstellung (O) abweichende Stellung (S2, S1) eingestellt wird.

2. Verfahren nach Anspruch 1, **dadurch gekennzeichnet, dass** das wenigstens eine Bypassventil (9, 10) auf eine gegenüber der ersten Stellung (S1) weiter geöffnete Betätigungsstellung (O) geöffnet wird.

3. Verfahren nach Anspruch 1 oder 2, **dadurch gekennzeichnet, dass** das wenigstens eine Bypassventil (9, 10) während einer vorgebbaren Betätigungszeit (Tv) in der Betätigungsstellung (O) gehalten wird.

4. Verfahren nach einem der vorangegangenen Ansprüche, **dadurch gekennzeichnet, dass** das wenigstens eine Bypassventil (9, 10) nach der vorgebbaren Betätigungszeit (Tv) im Wesentlichen wieder auf die erste Stellung (S1) eingestellt wird.

5. Verfahren nach einem der vorangegangenen Ansprüche, **dadurch gekennzeichnet, dass** das wenigstens eine Bypassventil (9, 10) nach der vorgebbaren Betätigungszeit (Tv) bis zu einer gegenüber der ersten Stellung (S1) weiter geschlossenen zweiten Stellung (S2) geschlossen und während einer vorgebbaren Zeit (T_{S}) in der zweiten Stellung (S2) gehalten wird, wobei vorzugsweise das wenigstens eine Bypassventil (9, 10) nach der vorgebbaren Zeit (T_{S}) im Wesentlichen wieder bis zur ersten Stellung (S1) geöffnet wird.

6. Verfahren nach einem der vorangegangenen Ansprüche, **dadurch gekennzeichnet, dass** die Zündung (11) in der Brennkraftmaschine (2) wieder aktiviert wird, wenn eine Drehzahl der Brennkraftmaschine (2) oder des Generators (1) einen vorgebbaren Drehzahlwert erreicht und/oder eine relative Phasenwinkeländerung des Generators (1) einen vorgebbaren Wert erreicht.

7. Verfahren nach einem der vorangegangenen Ansprüche, **dadurch gekennzeichnet, dass** das wenigstens eine Bypassventil (9, 10) nach Abklingen des Netzfehlers bis zu einer gegenüber der ersten Stellung (S1) weiter geschlossenen zweiten Stellung (S2) geschlossen und während einer vorgebbaren Zeit (T_{S}) in der zweiten Stellung (S2) gehalten wird, wobei vorzugsweise das wenigstens eine Bypassventil (9, 10) nach der vorgebbaren Zeit (T_{S}) im Wesentlichen wieder bis zur ersten Stellung (S1) geöffnet wird.

8. Verfahren nach einem der vorangegangenen Ansprüche, **dadurch gekennzeichnet, dass** nach Abklingen des Netzfehlers das Aktivieren der Zündung (11) und das Einstellen des wenigstens einen Bypassventils (9, 10) auf eine von der Betätigungsstellung (O) abweichende Stellung (S2, S1) im Wesentlichen zum selben Zeitpunkt (T4) stattfindet.

9. Verfahren nach einem der Ansprüche 1 bis 7, **dadurch gekennzeichnet, dass** nach Abklingen des Netzfehlers das Einstellen des wenigstens einen Bypassventils (9, 10) auf eine von der Betätigungsstellung (O) abweichende Stellung (S2, S1) nach dem Aktivieren der Zündung (11) stattfindet, vorzugsweise nach einer vorgebbaren zweiten Zeit nach dem Aktivieren der Zündung (11).

## Claims

1. A method of operating an internal combustion engine (2) coupled to a generator (1) in the event of a grid fault of a power supply grid (3) connected to the generator (1), in particular in the event of a dynamic grid voltage drop, wherein the internal combustion engine (2) includes a turbocharger (4) having a compressor (5) in an air feed duct (6) of the internal combustion engine (2) and an exhaust gas turbine (7) coupled to the compressor (5) in an exhaust gas duct (8) of the internal combustion engine (2), wherein there is provided at least one bypass valve (9, 10) for bypass of the compressor (5) and/or for bypass of the exhaust gas turbine (7), wherein upon or after detection of the grid fault the at least one bypass valve (9, 10) is at least temporarily actuated and wherein the ignition (11) in the internal combustion engine (2) is deactivated upon or after detection of the grid fault, wherein the ignition (11) in the internal combustion engine (2) is activated again after the grid fault disappears, wherein the at least one bypass valve (9, 10) has a first position (S1) prior to detection of the grid fault, wherein upon or after detection of the grid fault the at least one bypass valve (9, 10) is set to an actuation position (O) differing from the first position (S1), wherein the at least one bypass valve (9, 10) is set to a position (S2, S1) differing from the actuation position (O) after the grid fault disappears.

2. A method as set forth in claim 1 **characterised in that** the at least one bypass valve (9, 10) is opened to an actuation position (O) which is further opened in relation to the first position (S1).

3. A method as set forth in claim 1 or claim 2 **characterised in that** the at least one bypass valve (9, 10) is kept in the actuation position (O) during a predeterminable actuation time (Tv).

4. A method as set forth in one of the previous claims **characterised in that** the at least one bypass valve (9, 10) is set substantially again to the first position (S1) after the predeterminable actuation time (Tv).

5. A method as set forth in one of the previous claims **characterised in that** the at least one bypass valve (9, 10) is closed after the predeterminable actuation time (Tv) to a second position (S2) which is further closed in relation to the first position (S1) and is kept in the second position (S2) during a predeterminable time (T_{S}), wherein preferably the at least one bypass valve (9, 10) is opened substantially again to the first position (S1) after the predeterminable time (T_{S}).

6. A method as set forth in one of the previous claims **characterised in that** the ignition (11) in the internal combustion engine (2) is activated again if a rotary speed of the internal combustion engine (2) or the generator (1) reaches a predeterminable rotary speed value and/or a relative phase angle change in the generator (1) reaches a predeterminable value.

7. A method as set forth in one of the previous claims **characterised in that** the at least one bypass valve (9, 10) is closed to a second position (S2) which is further closed in relation to the first position (S1) after the grid fault disappears and is kept in the second position (S2) during a predeterminable time (T_{S}), wherein preferably the at least one bypass valve (9, 10) is opened substantially again to the first position (S1) after the predeterminable time (T_{S}).

8. A method as set forth in one of the previous claims **characterised in that** after the grid fault disappears activation of the ignition (11) and setting of the at least one bypass valve (9, 10) to a position (S2, S1) differing from the actuation position (O) takes place substantially at the same moment in time (T4).

9. A method as set forth in one of the claims 1 to 7 **characterised in that** after the grid fault disappears setting of the at least one bypass valve (9, 10) to a position (S2, S1) differing from the actuation position (O) takes place after activation of the ignition (11), preferably after a predeterminable second time after activation of the ignition (11).

## Revendications

1. Procédé de fonctionnement d'un moteur à combustion interne (2) couplé à un générateur (1) en cas de défaillance du réseau d'un réseau d'alimentation en énergie (3) raccordé au générateur (1), en particulier en cas de chute dynamique de la tension du réseau, le moteur à combustion interne (2) comprenant un turbocompresseur (4) qui présente un compresseur (5) dans une conduite d'alimentation d'air (6) du moteur à combustion interne (2) et une turbine à gaz d'échappement (7), couplée au compresseur (5), dans une conduite de gaz d'échappement (8) du moteur à combustion interne (2), au moins une soupape de dérivation (9, 10) étant prévue pour contourner le compresseur (5) et/ou pour contourner la turbine à gaz d'échappement (7), la soupape de dérivation (9, 10) au moins au nombre de un étant actionnée au moins temporairement lors de la détection de la défaillance du réseau ou après cette détection, et un allumage (11) dans le moteur à combustion interne (2) étant désactivé lors de la détection de la défaillance du réseau ou après cette détection, l'allumage (11) dans le moteur à combustion interne (2) étant de nouveau activé après l'évanouissement de la défaillance du réseau, la soupape de dérivation (9, 10) au moins au nombre de un présentant une première position (S1) avant la détection de la défaillance du réseau, la soupape de dérivation (9, 10) au moins au nombre de un étant, lors de la détection de la défaillance du réseau ou après cette détection, réglée sur une position d'actionnement (O) qui diffère de la première position (S1), la soupape de dérivation (9, 10) au moins au nombre de un étant, après l'évanouissement de la défaillance du réseau, réglée sur une position (S2, S1) qui diffère de la position d'actionnement (O).

2. Procédé selon la revendication 1, **caractérisé en ce que** la soupape de dérivation (9, 10) au moins au nombre de un est ouverte sur une position d'actionnement (O) qui est ouverte davantage par rapport à la première position (S1).

3. Procédé selon la revendication 1 ou 2, **caractérisé en ce que** la soupape de dérivation (9, 10) au moins au nombre de un est maintenue dans la position d'actionnement (O) pendant une durée d'actionnement (Tv) pouvant être définie au préalable.

4. Procédé selon l'une des revendications précédentes, **caractérisé en ce que** la soupape de dérivation (9, 10) au moins au nombre de un est essentiellement réglée de nouveau sur la première position (S1) à l'issue de la durée d'actionnement (Tv) pouvant être définie au préalable.

5. Procédé selon l'une des revendications précédentes, **caractérisé en ce que** la soupape de dérivation (9, 10) au moins au nombre de un est, à l'issue de la durée d'actionnement (Tv) pouvant être définie au préalable, fermée jusqu'à une deuxième position (S2) fermée davantage par rapport à la première position (S1) et est retenue dans la deuxième position (S2) pendant une durée (T_{S}) pouvant être définie au préalable, la soupape de dérivation (9, 10) au moins au nombre de un étant de préférence essentiellement ouverte de nouveau jusqu'à la première position (S1) à l'issue de la durée (T_{S}) pouvant être définie au préalable.

6. Procédé selon l'une des revendications précédentes, **caractérisé en ce que** l'allumage (11) dans le moteur à combustion interne (2) est de nouveau activé quand une vitesse de rotation du moteur à combustion interne (2) ou du générateur (1) atteint une valeur de vitesse de rotation pouvant être définie au préalable et/ou quand une variation d'angle de phase relative du générateur (1) atteint une valeur pouvant être définie au préalable.

7. Procédé selon l'une des revendications précédentes, **caractérisé en ce que** la soupape de dérivation (9, 10) au moins au nombre de un, après l'évanouissement de la défaillance du réseau, est fermée jusqu'à une deuxième position (S2) fermée davantage par rapport à la première position (S1) et maintenue dans la deuxième position (S2) pendant une durée (T_{S}) pouvant être définie au préalable, la soupape de dérivation (9, 10) au moins au nombre de un étant de préférence, à l'issue de la durée (T_{S}) pouvant être définie au préalable, essentiellement ouverte de nouveau jusqu'à la première position (S1).

8. Procédé selon l'une des revendications précédentes, **caractérisé en ce que**, après l'évanouissement de la défaillance du réseau, l'activation de l'allumage (11) et le réglage de la soupape de dérivation (9, 10) au moins au nombre de un sur une position (S2, S1) qui diffère de la position d'actionnement (O) ont essentiellement lieu au même moment (T4).

9. Procédé selon l'une des revendications 1 à 7, **caractérisé en ce que**, après l'évanouissement de la défaillance du réseau, le réglage de la soupape de dérivation (9, 10) au moins au nombre de un sur une position (S2, S1) qui diffère de la position d'actionnement (O) a lieu après l'activation de l'allumage (11), de préférence à l'issue d'une deuxième durée pouvant être définie au préalable après l'activation de l'allumage (11).
